# EUROPÄISCHE PATENTSCHRIFT

(11) **EP 3 530 963 B1**
(45) Veröffentlichungstag und Bekanntmachung des Hinweises auf die Patenterteilung: **04.10.2023**
(21) Anmeldenummer: 19158430.9
(22) Anmeldetag: 21.02.2019
(51) Int. Cl.: F16B 2/22, F16B 5/12, A47C 19/04

(54) **LATTENROST-VERBINDUNGSEINRICHTUNG**
BED BASE CONNECTING DEVICE
DISPOSITIF DE CONNEXION POUR SOMMIERS A LATTES

(30) Priorität: 21.02.2018 DE 102018103948
(43) Veröffentlichungstag der Anmeldung: 28.08.2019
(73) Patentinhaber: Günther Bachmann GmbH & Co. KG, 84494 Neumarkt-St. Veit (DE)
(72) Erfinder: Englbrecht, Ludwig, 84494 Neumarkt-Sankt Veit (DE)
(74) Vertreter: Rothkopf, Ferdinand

(56) Entgegenhaltungen:
- CN-Y- 2 798 729
- DE-A1- 2 103 504
- DE-C- 815 096
- DE-U- 7 523 178
- DE-U1- 29 615 173
- DE-U1-202004 014 352
- US-A- 3 871 039
- US-A- 4 135 266
- US-A1- 2011 241 502
- US-B1- 6 415 465

## Beschreibung

### Hintergrund der Erfindung

Die Erfindung betrifft eine Lattenrost-Verbindungseinrichtung zum Verbinden von einem ersten und einem zweiten Längsholm-Teil eines Lattenrost-Längsholms an einer Verbindungsstelle. Ferner betrifft die Erfindung eine Verwendung einer Lattenrost-Verbindungseinrichtung an einem Lattenrost mit mindestens zwei Längsholm-Teilen.

Aus dem allgemeinen Stand der Technik ist es bekannt die Längsholme eines Lattenrostes, wie er insbesondere für Betten verwendet wird, teilbar zu gestalten. Dazu werden die Längsholme des Lattenrostes in mindestens zwei Längsholm-Teile aufgeteilt, die zum Zusammenfügen des fertigen Lattenrostes dann an einer Verbindungsstelle zu verbinden sind. Erst mit dem Zusammenfügen der Längsholm-Teile entsteht der dann sich in der Regel über die gesamte Länge des Lattenrostes erstreckende Lattenrost-Längsholm. Mit den einzelnen Längsholm-Teilen sind hingegen Teile bzw. Abschnitte des Lattenrostes geschaffen, die sich einfacher bewegen und auch einfacher transportieren lassen. Solche Lattenrost-Teile können insbesondere auf Norm-Paletten verladen und mittels diesen versendet und eingelagert werden.

Aus DE 21 03 504 A1 ist ein Verbinder für Hohlprofile bekannt, der zwei Halbschalen umfasst, die in jeweils einen Endbereich von zwei zueinander zu verbindenden Hohlprofilen einzubringen sind. Dabei weist jede Halbschale auf ihrer dem Hohlprofil zugewandten Fläche mindestens zwei Nocken auf, die jeweils in eine zugehörige Ausnehmung an der Innenfläche des Hohlprofils einrastend gestaltet sind. Zwischen den beiden Halbschalen ist an einem ihrer axialen Endbereiche eine Druckfeder angeordnet, die die beiden Halbschalen dort auseinander drückt. Im axial mittleren Bereich der Halbschalen ist ein Keilschlossring vorgesehen, in den ein Befestigungskeil einzubringen ist. Zum Herstellen einer Verbindung werden die zwei Hohlprofile an ihren Hohlprofilenden über die Halbschalen geschoben. Anschließend wird der Befestigungskeil angetrieben, wobei sich die Außenflächen der beiden Halbschalen an die Innenflächen der beiden Hohlprofilenden anlehnen.

Aus DE 815 096 C1 ist ein Stoßverbinder für Gerüstrohre oder -stangen bekannt, der zwei untereinander formgleiche Verbindungsteile mit der Umfläche der aneinanderstoßenden Rohre oder Stangen angepassten Sitzflächen und an diesen angebrachten Vorsprüngen umfasst, die in dazu passende Aussparungen in den Rohren oder Stangen eingreifen. Dabei sind beide Verbindungsteile fest an die Rohre oder Stangen mittels einiger Schraubenbolzen und Schraubenmuttern anzupressen.

Aus US 2011 241502 A1 eine Eckverbindungsstruktur eines Aluminiumextrusionsschranks mit einem Eckverbinder bekannt. Mit dem Eckverbinder sind jeweils im rechten Winkel zueinander angeordnete hohle Stangen miteinander zu verbinden. Dazu stehen von dem Eckverbinder Zapfen ab, über die jeweils eine zugehörige Stange zu schieben ist. Zum Befestigen der über den Zapfen geschobenen Stange ist am Eckverbinder ein Durchgangsloch vorgesehen, durch das eine Schraube zu führen ist.

### Zugrundeliegende Aufgabe

Da derartige Lattenroste aus Lattenrost-Teilen meist von den Endverbrauchern selbst zu fertigen Lattenrosten montiert werden, ist es besonders wichtig, dass diese Montage einfach und möglichst ohne Werkzeug vorgenommen werden kann. Zugleich muss der fertig montierte Lattenrost eine hohe Stabilität aufweisen.

### Erfindungsgemäße Lösung

Diese Aufgabe ist erfindungsgemäß mit einer Lattenrost-Verbindungseinrichtung zum Verbinden von einem ersten und einem zweiten Längsholm-Teil eines Lattenrost-Längsholms an einer Verbindungsstelle nach Anspruch 1 gelöst, bei der ein die Verbindungsstelle überbrückendes Längselement vorgesehen ist, an dem mindestens ein in das erste Längsholm-Teil einzugreifendes, erstes Querstück und mindestens ein in das zweite Längsholm-Teil einzugreifendes, zweites Querstück abstehen, und ein Sperrelement vorgesehen ist, mit dem ein Austreten der Querstücke aus dem zugehörigen Längsholm-Teil verhinderbar ist. Ferner ist die Erfindung auf eine Verwendung einer derartigen erfindungsgemäßen Lattenrost-Verbindungseinrichtung an einem Lattenrost mit mindestens zwei Längsholm-Teilen gerichtet.

Erfindungsgemäß ist eine einfache, sehr funktionale und zugleich sehr stabile Verbindung von Längsholm-Teilen eines Lattenrostes geschaffen. Die Montage bzw. das Zusammenfügen sowie auch die Demontage bzw. das Zerlegen des erfindungsgemäßen Lattenrostes ist dabei vollständig ohne Werkzeug möglich. Dies ist dadurch erreicht, dass die beiden Funktionen des stabilen Verbindens der Längsholm-Teile und des Sicherns dieser Verbindung getrennt in separaten Elementen ausgebildet bzw. realisiert sind. Unter Element wird hier ein Bauteil verstanden, insbesondere ein separates Bauteil, welches gezielt eine funktionale Wirkung entfaltet. Vorliegend sind dies als erstes Bauteil ein Längselement, das durch seine Längsstreckung eine brückenartige Verbindung zwischen den beiden beteiligten Längsholm-Teilen herstellt. Ferner ist als zweites Bauteil ein Sperrelement vorgesehen, welches eine Sicherung bzw. Sperre für das Längselement bildet. Das Sperrelement hält also das Längselement in seiner Wirklage und stellt damit sicher, dass dieses Längselement in dieser Lage ortsfest verbleibt und über die Nutzungsdauer des Lattenrostes hinweg als eigentlicher Verbinder der Längsholm-Teile wirkt.

Die am Längselement ausgebildeten Querstücke stellen die Kopplung zu jeweils einem der Längsholm-Teile her. Diese Querstücke erstrecken sich quer zur Längserstreckung des Längselements und wirken dadurch als Bolzen bzw. Dorn, der in das zugehörige Längsholm-Teil hineinragt. Die Querstücke stellen so eine formschlüssige und damit besonders belastbare Kopplung zum Längsholm-Teil her. Zugleich ist eine derartige Kopplung besonders einfach mittels eines einfachen seitlichen Einschiebens der Querstücke in das zugehörige Längsholm-Teil herzustellen. Anschließend kann auf ebenfalls sehr einfache Weise die Gesamtverbindung durch ein Aufklipsen des Sperrelements wie erläutert dauerhaft gesichert werden.

Bei einer vorteilhaften Weiterbildung der Erfindung sind an dem Längselement zwei erste Querstücke und zwei zweite Querstücke vorgesehen.

Mittels mindestens zweier erster Querstücke und mindestens zweier zweiter Querstücke ist an dem jeweils zugehörigen Längsholm-Teil eine statisch klar bestimmte Ankopplung geschaffen, die als solche auch einzeln hergestellt und gelöst werden kann. Die Längsholm-Teile können also auch einzeln an die erfindungsgemäße Verbindungseinrichtung angebracht und von dieser gelöst werden. Ferner kann damit die Verbindungseinrichtung besonders vorteilhaft zunächst an nur einem Längsholm-Teil angeordnet werden und erst danach das zweite Längsholm-Teil zu dieser Gruppierung montiert werden. Erst danach braucht das erfindungsgemäße Sperrelement angebracht zu werden, um damit die Gesamtanordnung dauerhaft zu sichern. Eine Demontage der Gesamtanordnung ist in gleich einfacher Weise in umgekehrter Reihenfolge möglich.

Bei der erfindungsgemäßen Lattenrost-Verbindungseinrichtung ist ferner vorzugsweise an dem Längselement ein weiteres an der Verbindungsstelle einzugreifendes Querstück vorgesehen. Mit diesem an der Verbindungsstelle selbst eingreifenden Querstück kann ein definierter Abstand zwischen den Längsholm-Teilen eingestellt werden. Ferner kann mit nur einem Querstück eine Kopplung zu beiden beteiligten Längsholm-Teilen hergestellt werden. So kann insgesamt mit nur drei Querstücken eine Anbindung an zwei Längsholm-Teile geschaffen werden. Dies ist besonders vorteilhaft, weil zum Einbringen der Querstücke zugehörige Öffnungen an den Längsholm-Teilen, insbesondere Bohrungen, auszuformen sind. Dieses Ausformen erfordert gesonderte Arbeitsschritte, die es möglichst einzusparen gilt.

Das Längselement ist vorzugsweise aus Metall, insbesondere Stahl, hergestellt. So kann mit geringem Material- und Platzbedarf eine hohe Stabilität der Kopplung der beiden beteiligten Längsholm-Teile geschaffen werden. Die Längsholm-Teile selbst sind dabei in der Regel aus Holz. Sie können aber auch aus Metall, insbesondere Aluminium, oder auch Kunststoff hergestellt sein. Stets ist eine einfache, kostengünstige und zugleich statisch hochwertige Kopplung mittels der genannten Querstücke möglich. Die Querstücke weisen dabei bevorzugt eine kreisrunde Querschnittsfläche auch, sind also vorzugsweise als Rundbolzen gestaltet. Alternativ weisen die Querstücke vorzugsweise eine quadratische oder rechteckige Querschnittsfläche auf.

Das Sperrelement ist in bevorzugter Weise mit einem in zumindest eines der Längsholm-Teile einzugreifenden Bolzenstück gestaltet. Dieses Bolzenstück koppelt das Sperrelement an ein bzw. beide Längsholm-Teile und positioniert dieses damit. Zugleich wird das Sperrelement mit dem Bolzenstück ortsfest gehalten, so dass es dadurch das Längselement hinsichtlich dessen Lage sicher kann.

Das Sperrelement ist erfindungsgemäß ferner mit einem das Längselement übergreifende Klammerstück mit einer Rastnase gestaltet. Das Klammerstück wirkt als ein Klipp, der beim Montieren des Sperrelements einfach manuell auf das Längselement aufgesetzt werden kann. Der Klipp übergreift damit das Längselement quer zur Richtung der Querstücke und verhindert dadurch, dass eines der Querstücke in dessen Axialrichtung aus dem zugehörigen Längsholm-Teil herauswandern könnte.

Das Sperrelement ist darüber hinaus vorteilhaft mit einem an der Verbindungsstelle zwischen den Längsholm-Teilen zu liegenden Abstandsstück gestaltet. Das Abstandsstück dient als Zwischenlage bzw. Zwischenschicht zwischen den Stirnseiten der beiden beteiligten Längsholm-Teilen, mittels der Geräusche und Abrieb zwischen diesen Stirnseiten der Längsholm-Teile vermieden werden können. Vorteilhaft ist das Abstandsstück zugleich von dem genannten Bolzenstück gebildet.

Das Sperrelement ist besonders kostengünstig und funktional vorteilhaft aus Kunststoff hergestellt. Dabei weist der verwendete Kunststoff bevorzugt eine derartige Materialzusammensetzung auf, dass eine gewisse Elastizität und Bruchfestigkeit gewährleistet ist.

Die Verbindungsstelle zwischen den beiden Längsholm-Teilen ist hinsichtlich ihrer Formgestaltung in verschiedener Art vorteilhaft auszubilden. Erfindungsgemäß bevorzugt ist eine Form, bei der die Stirnseiten der Längsholm-Teile in Gestalt einer Nut-Feder-Verbindung mit oder ohne Hinterschnitt ineinandergreifen. Ferner ist eine Form bevorzugt, bei der die Stirnseiten der Längsholm-Teile eine gerundete oder S-förmige Gestalt aufweisen. Mit derartigen Formen ist ein Vorpositionieren der Längsholm-Teile relativ zueinander vor deren Montage möglich.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:
- Fig. 1: eine perspektivische Ansicht einer ersten Ausführungsform einer erfindungsgemäßen Lattenrost-Verbindungeinrichtung in einem ersten Montagestadium,
- Fig. 2: die Lattenrost-Verbindungseinrichtung gemäß Fig. 1 in einem nachfolgenden, zweiten Montagestadium,
- Fig. 3: die Lattenrost-Verbindungseinrichtung gemäß Fig. 1 in einem nachfolgenden, dritten Montagestadium und
- Fig. 4: eine perspektivische Ansicht einer zweiten Ausführungsform einer erfindungsgemäßen Lattenrost-Verbindungseinrichtung.

### Detaillierte Beschreibung der Ausführungsbeispiele

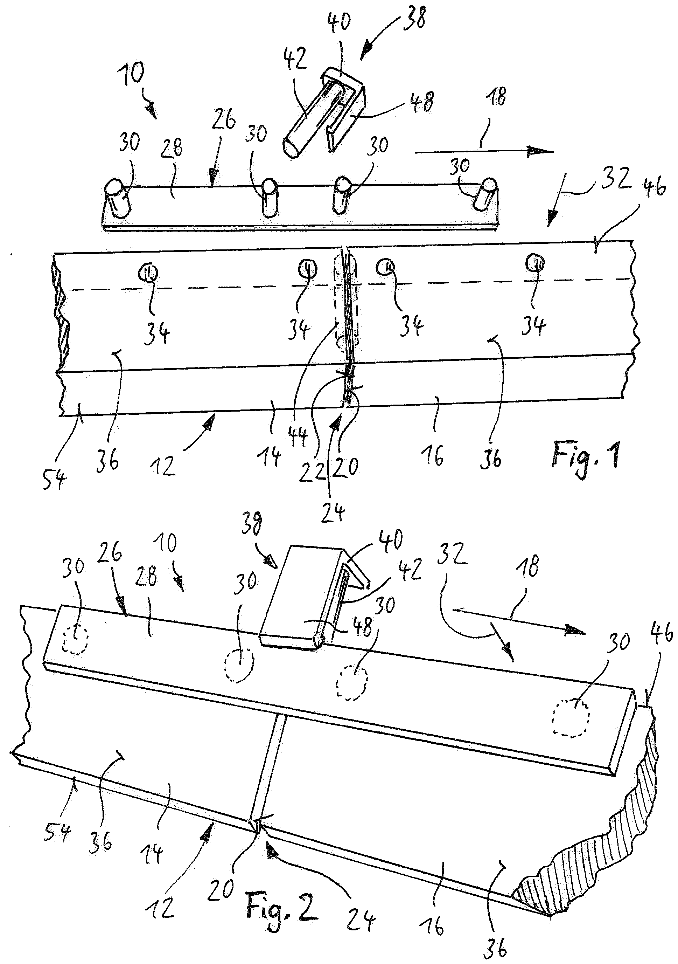

In den Fig. 1 bis 3 ist eine Lattenrost-Verbindungseinrichtung 10 dargestellt, die zum Herstellen eines durchgehenden Lattenrost-Längsholms 12 vorgesehen ist. Der Lattenrost-Längsholm 12 ist aus einem ersten Längsholm-Teil 14 und einem zweiten Längsholm-Teil 16 gestaltet, die sich jeweils als Leisten bzw. Holme mit rechteckiger Querschnittfläche in eine Längsrichtung 18 erstrecken.

Das erste Längsholm-Teil 14 endet an einer ersten Stirnseite 20 und das zweite Längsholm-Teil 16 endet an einer dieser Stirnseite 20 gegenüberliegenden Stirnseite 22. Auf diese Weise ist zwischen den Stirnseiten 20 und 22 eine Verbindungstelle 24 gebildet, an der die beiden Längsholm-Teile 14 und 16 einander mit etwas Abstand gegenüberliegen.

Die Lattenrost-Verbindungseinrichtung 10 ist mit einem Längselement 26 gestaltet, das aus Metall, vorliegend Stahl, hergestellt ist und ein Plattenstück 28 sowie vier Querstücke 30 umfasst. Das Plattenstück 28 ist als Streifen bzw. Flacheisen mit rechteckiger Querschnittfläche gestaltet und erstreckt sich in Längsrichtung 18 von dem ersten Längsholm-Teil 14 über die Verbindungsstelle 24 hinweg bis über das zweite Längsholm-Teil 16.

Dabei ragen die Querstücke 30 jeweils von dem Plattenstück 28 in eine Querrichtung 32 ab, die sich quer zur Längsrichtung 18 erstreckt. Zwei der vier Querstücke 30 befinden sich an jener Seite des Längselements 26, die das erste Längsholm-Teil 14 abdeckt. Die anderen zwei der vier Querstücke 30 befinden sich an der anderen Seite des Längselements 26, also dort, wo dieses den zweiten Längsholm-Teil 16 überdeckt. Die Querstücke 30 weisen dabei jeweils in Längsrichtung 18 einen gewissen Abstand auf und greifen im montierten Zustand (siehe Fig. 2) in Queröffnungen 34 ein, die an den Längsholm-Teilen 14 bzw. 16 ausgebildet sind. Die Queröffnungen 34 erstrecken sich ebenfalls in Querrichtung 32 und zwar derart, dass das Längselement 26 die an ihren Stirnseiten 20 bzw. 22 gegenüberliegenden Längsholm-Teile 14 und 16 in Längsrichtung 18 ortsfest an einander koppelt.

Die Queröffnungen 34 sind dazu mit entsprechenden Abständen in Seitenflächen 36 der Längsholm-Teile 14 und 16 als Sackbohrungen ausgebildet und hinsichtlich ihrer Querschnittsfläche genauso groß gestaltet, wie die Querstücke 30.

Ferner ist bei der Lattenrost-Verbindungseinrichtung 10 ein Sperrelement 38 aus Kunststoff vorgesehen, das ein plattenförmiges Kopfstück 40 mit einem davon rechtwinklig abstehenden, kreiszylindrischen Bolzenstück 42 umfasst.

Das Bolzenstück 42 ist in eine Bolzenöffnung 44 einzufügen, die im Bereich der Verbindungstelle 24 in Gestalt zweier Zylinderschalen an den beiden Stirnseiten 20 und 22 ausgebildet ist. Die Bolzenöffnung 44 ragt dabei bei der Ausführungsform gemäß Fig. 1 bis 3 von einer Unterseite 46 der beiden Längsholm-Teile 14 und 16 in diese hinein. Die Bolzenöffnung 44 erstreckt sich ebenfalls quer zur Längsrichtung 18, allerdings in einem Winkel von 90° versetzt zu der Querrichtung 32 der Querstücke 30.

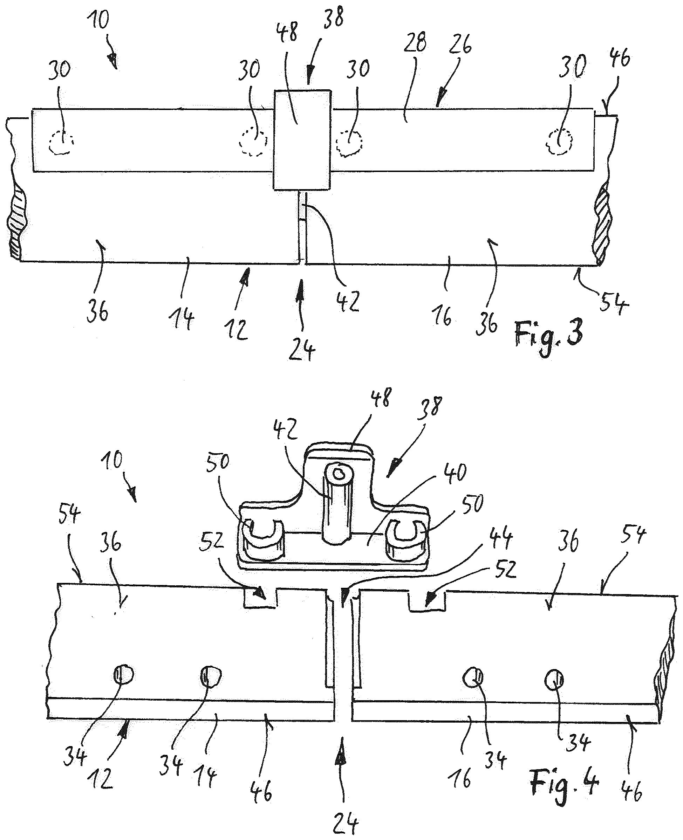

Das Sperrelement 38 weist ferner ein vom Kopfstück 40 seitlich abstehendes Klammerstück 48 auf, welches bei eingefügtem Bolzenstück 42 das Plattenstück 28 des Längselements 26 übergreift (siehe Fig. 3).

Das Klammerstück 48 verhindert so im montierten Zustand, dass das Längselement 26 mit seinen Querstücken 30 aus den Queröffnungen 34 heraus wandern könnte.

Bei der Ausführungsform gemäß Fig. 4 ist das zugehörige Sperrelement 38 ebenfalls mit einem Bolzenstück 42 ausgestattet. Allerdings befinden sich rechts und links seitlich neben dem Bolzenstück 42 an dem dabei verbreiterten, zugehörigen Kopfstück 40 zwei Ringstücke 50, die in entsprechend ausgeformte Ringöffnungen 52 an den Lattenrost-Teilen eingreifen können.

Die Ringöffnungen 52 befinden sich an einer Oberseite 54 der Längsholm-Teile 14 und 16 und stellen dort eine auf Druck belastete Verbindung zwischen den Längsholm-Teilen 14 und 16 her. Zugleich hält das Bolzenstück 42 des Sperrelements 38 einen Abstand zwischen den Stirnseiten 20 und 22 sicher. So können insbesondere Reibgeräusche zwischen den Stirnseiten 20 und 22 vermieden werden.

Eine Zug-Biege-Verbindung zwischen den Längsholm-Teilen 14 und 16 ist im Übrigen, wie auch bei der Ausführungsform gemäß Fig. 1 bis 3, mittels des Längselements 26 und dessen Querstücken 30 in den Queröffnungen 34 geschaffen. Dabei befinden sich diese Querstücke 30 zusammen mit dem länglichen Plattenstück 28 wiederum nahe der Unterseite 46 der Längsholm-Teile 14 bzw. 16.

### Bezugszeichenliste

- 10: Lattenrost-Verbindungseinrichtung
- 12: Lattenrost-Längsholm
- 14: erstes Längsholm-Teil
- 16: zweites Längsholm-Teil
- 18: Längsrichtung
- 20: erste Stirnseite
- 22: zweite Stirnseite
- 24: Verbindungsstelle
- 26: Längselement
- 28: Plattenstück
- 30: Querstück
- 32: Querrichtung
- 34: Queröffnung
- 36: Seitenfläche
- 38: Sperrelement
- 40: Kopfstück
- 42: Bolzenstück
- 44: Bolzenöffnung
- 46: Unterseite
- 48: Klammerstück
- 50: Ringstück
- 52: Ringöffnung
- 54: Oberseite

## Patentansprüche

1. Lattenrost-Verbindungseinrichtung (10) zum Verbinden von einem ersten und einem zweiten Längsholm-Teil (14, 16) eines Lattenrost-Längsholms (12) an einer Verbindungsstelle (24),
wobei ein die Verbindungsstelle (24) zu überbrückendes Längselement (26) vorgesehen ist, an dem mindestens ein in das erste Längsholm-Teil (14) einzugreifendes, erstes Querstück (30) und mindestens ein in das zweite Längsholm-Teil (16) einzugreifendes, zweites Querstück (30), abstehen, und ein Sperrelement (38) vorgesehen ist, mit dem ein Austreten der Querstücke (30) aus dem zugehörigen Längsholm-Teil (14, 16) verhinderbar ist,
wobei das Sperrelement (38) mit einem das Längselement (26) zu übergreifenden Klammerstück (48) mit einer Rastnase gestaltet ist, wobei das Klammerstück als ein Klipp wirkt, der beim Montieren des Sperrelements (38) auf das Längselement (26) aufsetzbar ist und damit das Längselement (26) quer zur Richtung der Querstücke von dem Klipp übergreifbar ist.

2. Lattenrost-Verbindungseinrichtung nach Anspruch 1,
**dadurch gekennzeichnet, dass** an dem Längselement (26) zwei erste Querstücke (30) und zwei zweite Querstücke (30) vorgesehen sind.

3. Lattenrost-Verbindungseinrichtung nach Anspruch 1 oder 2,
**dadurch gekennzeichnet, dass** an dem Längselement (26) ein weiteres an der Verbindungsstelle (24) einzugreifendes Querstück vorgesehen ist.

4. Lattenrost-Verbindungseinrichtung nach einem der Ansprüche 1 bis 3, **dadurch gekennzeichnet, dass** das Längselement (26) aus Metall, insbesondere Stahl, hergestellt ist.

5. Lattenrost-Verbindungseinrichtung nach einem der Ansprüche 1 bis 4, **dadurch gekennzeichnet, dass** das Sperrelement (38) mit einem in zumindest eines der Längsholm-Teile (14, 16) einzugreifenden Bolzenstück (42) gestaltet ist.

6. Lattenrost-Verbindungseinrichtung nach einem der Ansprüche 1 bis 5, **dadurch gekennzeichnet, dass** das Sperrelement (38) mit einem an der Verbindungsstelle (24) zwischen den Längsholm-Teilen (14, 16) zu liegenden Abstandsstück gestaltet ist.

7. Lattenrost-Verbindungseinrichtung nach einem der Ansprüche 1 bis 6, **dadurch gekennzeichnet, dass** das Sperrelement (38) aus Kunststoff hergestellt ist.

8. Verwendung einer Lattenrost-Verbindungseinrichtung (10) nach einem der Ansprüche 1 bis 7 an einem Lattenrost mit mindestens zwei Längsholm-Teilen (14, 16).

## Claims

1. Slatted frame connection device (10) for connecting a first and a second longitudinal beam part (14, 16) of a slatted frame longitudinal beam (12) at a connection point (24),
wherein there is provided a longitudinal element (26) which is to bridge the connection point (24) and from which there protrude at least a first transverse member (30) which is to engage into the first longitudinal beam part (14) and at least a second transverse member (30) which is to engage into the second longitudinal beam part (16), and there is provided a locking element (38) with which the transverse members (30) can be prevented from coming out of the associated longitudinal beam part (14, 16),
wherein the locking element (38) is designed with a bracket member (48) which has a latching projection and is to engage over the longitudinal element (26), wherein the bracket member acts as a clip which can be fitted to the longitudinal element (26) on installation of the locking element (38), and the clip is thus able to engage over the longitudinal element (26) transverse to the direction of the transverse members.

2. Slatted frame connection device according to claim 1,
**characterised in that** two first transverse members (30) and two second transverse members (30) are provided on the longitudinal element (26).

3. Slatted frame connection device according to claim 1 or 2,
**characterised in that** a further transverse member which is to engage at the connection point (24) is provided on the longitudinal element (26).

4. Slatted frame connection device according to any one of claims 1 to 3, **characterised in that** the longitudinal element (26) is made of metal, in particular steel.

5. Slatted frame connection device according to any one of claims 1 to 4, **characterised in that** the locking element (38) is designed with a pin member (42) which is to engage into at least one of the longitudinal beam parts (14, 16).

6. Slatted frame connection device according to any one of claims 1 to 5, **characterised in that** the locking element (38) is equipped with a spacer which is to lie at the connection point (24) between the longitudinal beam parts (14, 16).

7. Slatted frame connection device according to any one of claims 1 to 6, **characterised in that** the locking element (38) is made of plastics material.

8. Use of a slatted frame connection device (10) according to any one of claims 1 to 7 on a slatted frame having at least two longitudinal beam parts (14, 16).

## Revendications

1. Dispositif de connexion pour sommier à lattes (10) servant à connecter une première et une deuxième partie de longeron (14, 16) d'un longeron de sommier à lattes (12) au niveau d'un point de jonction (24) ;
dans lequel un élément longitudinal (26) servant au pontage du point de jonction (24) est prévu, au niveau duquel ressortent au moins une première pièce transversale (30) à imbriquer dans la première partie de longeron (14) et au moins une deuxième pièce transversale (30), à imbriquer dans la deuxième partie de longeron (16) et un élément de blocage (38) étant prévu à l'aide duquel une sortie des pièces transversales (30) peut être empêchée hors de la partie de longeron (14, 16) associée ;
dans lequel l'élément de blocage (38) avec une pièce en pince pouvant imbriquer l'élément longitudinal (26) (48) est réalisé avec un bec d'arrêt, dans lequel la pièce en pince agit comme un clips pouvant être mis en place sur l'élément longitudinal (26) lors du montage de l'élément de blocage (38) et englobant ainsi l'élément longitudinal (26) avec le clips, transversalement à la direction des pièces transversales.

2. Dispositif de connexion pour sommier à lattes selon la revendication 1, **caractérisé en ce que** deux premières pièces transversales (30) et deux deuxièmes pièces transversales (30) sont prévues au niveau de l'élément longitudinal (26).

3. Dispositif de connexion pour sommier à lattes selon la revendication 1 ou 2, **caractérisé en ce qu'**une pièce transversale supplémentaire s'imbriquant au niveau du point de jonction (24) est prévue au niveau de l'élément longitudinal (26).

4. Dispositif de connexion pour sommier à lattes selon l'une quelconque des revendications 1 à 3, **caractérisé en ce que** l'élément longitudinal (26) est fabriqué en métal, notamment en acier.

5. Dispositif de connexion pour sommier à lattes selon l'une quelconque des revendications 1 à 4, **caractérisé en ce que** l'élément de blocage (38) est réalisé avec une pièce de boulon (42) s'imbriquant dans au moins une des parties de longeron (14, 16).

6. Dispositif de connexion pour sommier à lattes selon l'une quelconque des revendications 1 à 5, **caractérisé en ce que** l'élément de blocage (38) est réalisé avec une pièce d'écartement reposant entre les parties de longeron (14, 16), au niveau du point de jonction (24).

7. Dispositif de connexion pour sommier à lattes selon l'une quelconque des revendications 1 à 6, **caractérisé en ce que** l'élément de blocage (38) est fabriqué en matière plastique.

8. Utilisation d'un dispositif de connexion pour sommier à lattes (10) selon l'une quelconque des revendications 1 à 7 au niveau d'un sommier à lattes doté d'au moins deux parties de longeron (14, 16).
